# EUROPÄISCHE PATENTANMELDUNG

(11) **EP 0 933 710 A2**
(43) Veröffentlichungstag der Anmeldung: **04.08.1999**
(21) Anmeldenummer: 99101419.2
(22) Anmeldetag: 27.01.1999
(51) Int. Cl.: G06F 13/40

(54) **Anordnung zum Erzeugen eines physikalischen Steuersignals in einem Rechnerbussystem**

(30) Priorität: 29.01.1998 DE 19804841
(71) Anmelder: Nagel Ingenieurbau GmbH, 03046 Cottbus (DE)
(72) Erfinder: Nagel, Torsten, 02979 Hoyerswerda (DE); Ermer, Volkmar, 02997 Wittichenau (DE)
(74) Vertreter: Haschick, Gerald

(57) **Zusammenfassung**

Die Erfindung betrifft eine Anordnung zum Erzeugen eines physikalischen Steuersignals zur Sendersteuerung und/oder Empfängersteuerung in einem bidirektionalen Datenstrom einer verwendeten BUS-Leitung aus verschiedenen physikalischen Medien, wie Kabel, Licht oder HF-Träger, unabhängig deren Länge.

## Beschreibung

Die Erfindung betrifft eine Anordnung zum Erzeugen eines physikalischen Steuersignals zur Sendersteuerung und/oder Empfängersteuerung in einem bidirektionalen Datenstrom einer BUS-Leitung.

Bekannt sind BUS-Systeme, welche mehrere Adern bzw. Signalkanäle zur Datenübertragung verwenden. Dabei werden entweder getrennte Empfangs- und Sendeleitungen und eine kombinierte Datenleitung zusammen mit einer oder mehreren Steuerleitungen verwendet. Dieses Funktionsprinzip wird in den meisten neu installierten BUS- und Datenübertragungssystemen verwendet. Nachteilig dieser Systeme ist in jedem Fall, daß eine Neuverlegung der Empfangs- und Sendeleitung für das BUS-System stattfinden muß und somit ein hoher ökonomischer Aufwand notwendig ist.

Weiterhin gibt es Systeme, die mit einer einzigen BUS-Leitung bzw. einer einzigen Datenleitung arbeiten, wobei jedoch an jedem Datenpunkt ein Mikrokontroller benötigt wird. Dabei handelt es sich um BUS-Systeme, welche entweder neu verlegt wurden oder vorhandene physikalische Medien, wie Kabel, Licht oder HF-Träger verwendet werden, aber durch entsprechende Mikrokontroller an den Datenpunkten übererwacht werden, was sich als Nachteil darstellt.

Bekannt ist eine weitere technische Lösung, wobei bei einem BUS-System an jedem Datenpunkt ein passiver Außenwiderstand, welcher sehr hochohmig ist, und ein Schalter, welcher ein Low-Transistor ist, für eine Sender- und Empfängercodierung verwendet wird. Der Nachteil dieser elektronischen Lösung besteht darin, daß durch den hochohmigen passiven Arbeitswiderstand an dem Datenpunkt die Länge der verwendeten verschiedenen physikalischen Medien, wie Kabel, Licht oder HF-Träger, begrenzt ist, da über die R-C-R-Glieder der physikalischen Medien eine Verfälschung der Datensignale auftritt.

Ziel der Erfindung ist es, eine Anordnung zum Erzeugen eines physikalischen Steuersignals zu finden, um zur Sendersteuerung oder Empfangssteuerung für einen bidirektionalen Datenstrom eine BUS-Leitung zu verwenden, welche bereits verlegt wurde, um somit einen hohen ökonomischen Vorteil zu erlangen.

Aufgabe der Erfindung ist es, eine Anordnung zum Erzeugen eines physikalischen Steuersignals zur Sendersteuerung und/oder Empfängersteuerung in einem bidirektionalen Datenstrom zu realisieren, wobei vorhandene physikalische Medien, wie Kabel, Licht oder HF-Träger unabhängig ihrer jeweiligen Länge verwendet werden können.

Die Aufgabe wird erfindungsgemäß dadurch gelöst, daß eine Anordnung zum Erzeugen eines physikalischen Steuersignals zur Sendersteuerung und/oder Empfängersteuerung in einem bidirektionalen Datenstrom gemäß des Anspruches 1 mit seinen Unteransprüchen realisiert wird.

Dabei wird die elektronische Schaltung für eine bidirektionale BUS-Leitung, welche einen passiven Arbeitswiderstand und einen elektronischen Schalter in Form eines Low-Transistors ausführt, so verändert, daß das parallel zu dem passiven Arbeitswiderstand ein elektronischer Schalter in Form eines HI-Transistors angeordnet wird und auf diesen elektronischen Schalter ein elektronisches Zeitglied geschaltet ist. Dieses elektronische Zeitglied besteht aus einer Monoflopanordnung, welche vorzugsweise durch ein Stratbit getriggert ist. Erfindungswesentlich ist dabei, daß parallel zu dem passiven Arbeitswiderstand, welcher Stand der Technik darstellt, der elektronische Schalter in Form eines HI-Transistors geschaltet ist und an diesem elektronischen Schalter ein Zeitglied in beschriebener Form angeordnet ist. Bei einem bidirektionalen Datenstrom auf der BUS-Leitung wird in der Anordnung je nach Flußrichtung in zwei Wege aufgeteilt, bearbeitet und wieder abgesendet. Erfindungswesentlich ist nun die in der erfindungsgemäßen Anordnung ersichtliche Monoflopanordnung als Zeitglied, die anhand eines datenflußvorhandenen Musters vorzugsweise ein Stratbit, den Beginn einer Sendung erkennt und den Datensender der jeweiligen Richtung beaufschlagt. Dabei wird der parallel geschaltete elektronische Schalter zum passiven Arbeitswiderstand kurzzeitig aktiv geschaltet, um ein schnelles Umladen der Datenleitungskapazität zu erreichen Mit dieser erfindungsgemäßen Anordnung werden die Nachteile des Standes der Technik kompensiert. Dabei werden vorhandene physikalische Medien, wie Kabel, Licht oder HF-Träger als BUS-Leitung verwendet und mit dieser eine Sendersteuerung und/oder Empfängersteuerung durchgeführt. Wesentlich ist dabei, daß die Länge der physikalischen Medien keine Rolle mehr spielt, da die Nachteile der Anordnung des Standes der Technik durch die Hochohmigkeit des passiven Arbeitswiderstandes behoben sind und somit eine Verfälschung der Sender- bzw. Empfängersignale durch die R-C-R-Kombination der physikalischen Medien entfallt. Somit ist möglich, verschiedene physikalische Medien unabhängig ihrer Länge, welche bereits in einer bestimmten Verlegungsform vorhanden sind, als Datenträger für die BUS-Leitung zu verwenden, ohne daß dabei Verfälschungen der Steuerund Empfängersignale auftreten. Damit ist eine Verwendung von verschiedenen physikalischen Medien als BUS-Leitung möglich, wobei die Länge der verschiedenen physikalischen Medien, wie Kabel, Licht oder HF-Träger, keine Bedeutung mehr spielt. Durch eine bekannte Bauart werden bei Verwendung von verschiedenen physikalischen Medien und der erfinderischen Anordnung für die einzelnen Datenpunkte im BUS-System die physikalischen Medien, wie Kabel, Licht oder HF-Träger, miteinander verbunden, und es ist somit möglich, ein BUS-Leitungssystem verschiedener Länge auf der Basis verschiedener physikalischer Medien, wie Kabel, Licht und HF-Träger, zu realisieren, was einen wesentlichen ökonomischen Vorteil bei der Errichtung von BUS-Systemen darstellt.

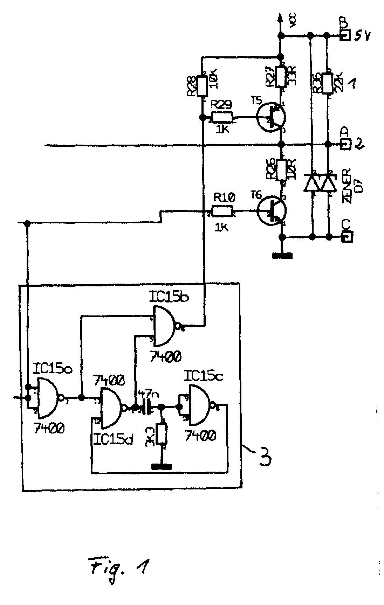

Die Erfindung wird nun an einem Ausführungsbeispiel näher erläutert. Dabei ist eine Figur (1) als erfindungsgemäße Schaltungsanordnung dargestellt. Die Figur (1) zeigt die erfindungsgemäße Anordnung. Hierbei ist ersichtlich, daß ein BUS-System mit einer einzigen Datenleitung verwendet wird und an einem entsprechenden Datenpunkt ein passiver Arbeitswiderstand (1) und ein Low-Transistor (T6) als Schalter angeordnet ist. Für die BUS-Leitung (2) können nun vorhandene im Erdreich bereits verlegte verschiedene physikalische Medien, wie Kabel, Licht oder HF-Träger, verwendet werden. Die Anordnung des passiven Arbeitswiderstandes (1) und des elektronischen Schalters als Low-Transistor (T6) stellt den Stand der Technik dar. Dabei ist der passive Arbeitswiderstand mit 22 Kilo-Ohm ausgeführt. Die Hochohmigkeit des passiven Arbeitswiderstandes (1) ist notwendig, um bei einem Pegelwechsel von Low nach High einen notwendigen Umladestrom zu erzeugen. Auf Grundlage dieser Hochohmigkeit des passiven Arbeitswiderstandes (1) wurde die Länge der physikalischen Medien, wie Kabel, Licht oder HF-Träger, gemäß des Standes der Technik dahingehend begrenzt, da durch die vorhandenen R-C-R-Kombinationen der physikalischen Medien bei einer bestimmten Länge eine Verfälschung der Datensignale auftritt. Dieser erfindungswesentliche Nachteil wurde nun dadurch beseitigt, daß parallel zu dem passiven Arbeitswiderstand (1) ein elektronischer Schalter (T5) in Form eines HI-Transistors geschaltet ist. An diesem elektronischen Schalter (T5) ist ein Zeitglied (3) in Form einer Monoflopanordnung, welche vorzugsweise durch ein Stratbit getriggert wird, angeordnet. Dieses Zeitglied (3) in Form einer Monoflopanordnung kann anhand eines im Datenfluß vorhandenen Musters den Beginn einer Sendung erkennen und den Datensender der jeweiligen Richtung beaufschlagen. Dabei wird der HI-Transistor als elektronischer Schalter (T5) kurzzeitig aktiv geschaltet, um ein schnelles Umladen der Datenleitungskapazitäten zu erreichen. Durch die Anordnung der beiden parallel geschalteten Transistoren (T6; T5) erfolgt ein Pegelwechsel auf der Leitung genauso schnell wie beim Wechsel von High nach Low. Diese Schaltung würde ohne die erfindungsgemäße Anordnung des Zeitgliedes (3) in Form einer Monoflopanordnung zu verheerenden BUS-Konflikten führen, da sowohl Low- und High-Transistoren im System aktiv sein könnten und es zu einem echten Kurzschluß kommt. Da die erfindungsgemäße Anordnung des Zeitgliedes zum elektronischen Schalter (T5) sowie der elektronische Schalter (T5) zum passiven Arbeitswiderstand (1) jedoch nur immer einen jeweils sendenden High-Transistor freigibt, sind diese BUS-Konflikte durch die parallele Anordnung des elektronischen Schalters (T5) und des Low-Transistors (T6) ausgeschlossen.

### Bezugszeichen

- 1.: Arbeitswiderstand
- 2.: BUS-Leitung
- 3.: Zeitglied
- T5: elektronischer Schalter
- T6: Low-Transistor

## Patentansprüche

1. Anordnung zum Erzeugen eines physikalischen Steuersignals zur Sendersteuerung und/oder Empfängersteuerung in einem bidirektionalen Datenstrom einer BUS-Leitung (2), wobei ein passiver Arbeitswiderstand (1) vorhanden ist, **dadurch gekennzeichnet,** daß parallel zum passiven Arbeitswiderstand (1) ein elektronischer Schalter (T5) angeordnet ist und diesem elektronischen Schalter (T5) ein elektronisches Zeitglied (3) beaufschlagt ist.

2. Anordnung nach Anspruch 1, **dadurch gekennzeichnet,** daß das Zeitglied (3) eine Monoflopanordnung ist, vorzugsweise getriggert durch ein Stratbit.

3. Anordnung nach Anspruch 1, **dadurch gekennzeichnet,** daß die BUS-Leitung (2) auf der Basis verschiedener physikalischer Medien, wie zum Beispiel Kabel, Licht oder HF-Träger, besteht.

4. Anordnung nach Anspruch 1, **dadurch gekennzeichnet,** daß der elektronische Schalter (T5) ein HI-Transistor ist.
